# EUROPEAN PATENT APPLICATION

(11) **EP 1 223 628 A1**
(43) Date of publication of application: **17.07.2002**
(21) Application number: 00961084.1
(22) Date of filing: 19.09.2000
(51) Int. Cl.: H01M 4/96, H01M 4/88, H01M 8/02

(54) **BONDED ELECTRODE/FILM FOR SOLID POLYMER FUEL CELL AND METHOD FOR PRODUCING THE SAME**

(30) Priority: 20.09.1999 JP 26606799
(71) Applicant: ASAHI GLASS COMPANY LTD., Tokyo 100-8405 (JP)
(72) Inventor: KUNISA, Yasuhiro Asahi Glass Company, Limited, Yokohama-shi, Kanagawa 221-8755 (JP); YOSHITAKE, Masaru Asahi Glass Company, Limited, Yokohama-shi, Kanagawa 221-8755 (JP); ENDOH, Eiji Asahi Glass Company, Limited, Yokohama-shi, Kanagawa 221-8755 (JP); YANAGISAWA, Eiji Asahi Glass Company, Limited, Yokohama-shi, Kanagawa 221-8755 (JP)
(74) Representative: Müller-Boré & Partner Patentanwälte
(86) International application number: JP0006384
(87) International publication number: WO0122510

(57) **Abstract**

It is to provide an electrode/membrane assembly (8) for a polymer electrolyte fuel cell, comprising, as an anode (6) and/or cathode (7), a gas diffusion electrode which comprises a gas diffusion layer (5, 5') comprising a carbon cloth (1, 1') and a water repellent carbon layer (2, 2') formed on the surface of the carbon cloth, and a catalyst layer (3, 3') containing a catalyst and a fluorocarbon sulfonic acid type ion exchange resin, formed on the gas diffusion layer, and which contains a solvent-soluble fluorine-containing polymer having substantially no ion exchange group, and comprising an ion exchange membrane (4) sandwiched therebetween and bonded to each other.

A polymer electrolyte fuel cell provided with the electrode/membrane assembly (8) having the above structure is excellent in durability with small deterioration in performance even when used for a long period of time.

## Description

### TECHNICAL FIELD

The present invention relates to an electrolyte/membrane assembly for a polymer electrolyte fuel cell and a process for its production.

### BACKGROUND ART

Attention has been drawn to a hydrogen oxygen fuel cell as a power generation system which gives no substantial adverse effect to the global environment, since the reaction product is only water in principle. Particularly with a polymer electrolyte fuel cell, a high output and a high density are achieved due to fast progress in research in recent years, and practical application is greatly expected.

In a polymer electrolyte fuel cell, a membrane constituting a polymer electrolyte is usually bonded to a catalyst layer, and this portion acts as a reaction portion of the cell. On the outside of the catalyst layer, gas diffusion layers are disposed so that the catalyst layers are adequately supplied with gas. Conventionally, a membrane and catalyst layer assembly may be integrated or may not be integrated with the gas diffusion layers, and as one which is not integrated, type (1) may, for example, be mentioned.

(1) A method of preliminarily integrating a catalyst layer and a polymer electrolyte membrane and sandwiching this integrated product with a carbon paper or a carbon cloth to be a gas diffusion layer (JP-A-10-261421). It is disclosed that a water repellent carbon layer made of carbon and a fluororesin may be formed on the surface or pore portions of the carbon paper or the carbon cloth, and the integrated product may be sandwiched so that the water repellent carbon layer faces the catalyst layer side.

Further, as the membrane and catalyst layer assembly integrated with the gas diffusion layer, the following types (2) and (3) may be mentioned.

(2) The method of disposing a gas diffusion layer, a catalyst layer, a membrane, a catalyst layer and a gas diffusion layer in this order, using a carbon paper as the gas diffusion layer, and hot-pressing the entire layers for bonding. Specifically, for example, a method has been reported wherein a catalyst layer for the anode is formed by directly coating an ion exchange membrane with a coating fluid for formation of a catalyst layer (hereinafter referred to as a catalyst ink), a catalyst layer for the cathode is prepared by coating the surface of a carbon paper with a water repellent catalyst ink containing polytetrafluoroethylene (hereinafter referred to as PTFE), followed by baking, a carbon paper is disposed on the outside of the catalyst layer on the anode side, and the carbon paper having a catalyst layer formed thereon is disposed on the outside of the ion exchange membrane on the cathode side so that the catalyst layer faces inside, and the entire laminate is hot-pressed for bonding (The 36th Battery Symposium, Abstract, 225, (1995)).

(3) A method of disposing a gas diffusion layer, a catalyst layer, a membrane, a catalyst layer and a gas diffusion layer in this order, using as the gas diffusion layer a carbon cloth having a water repellent carbon layer coated thereon so that components in the carbon layer infiltrate in a thickness direction, and hot-pressing the entire laminate for bonding. Specifically, for example, a method has been reported wherein a carbon cloth is subjected to a water repellent treatment by means of PTFE, which is coated with carbon black subjected to a water repellent treatment to form a gas diffusion layer comprising a carbon cloth and a carbon layer formed on the carbon cloth. Then, the carbon layer is coated with a catalyst ink containing a catalyst and an ion exchange resin solution to form a catalyst layer. Two such laminates are prepared, and an ion exchange membrane is sandwiched between the two, followed by hot pressing, to integrate the gas diffusion layer, the catalyst layer and the membrane (JP-A-8-7897).

With the method (1), since the membrane and catalyst layer assembly is not integrated with the gas diffusion layers, when the gas diffusion layer, the membrane and catalyst layer assembly and the gas diffusion layer are interposed in this order between two separators having gas flow paths, one of the gas diffusion layers is likely to slip, such being problematic. Accordingly, a portion at which the catalyst layer and the gas diffusion layer are not in contact with each other may form, and a portion at which no cell reaction takes place may be present, or water formed by the cell reaction is likely to be accumulated in a space at the portion at which the layers are not in contact with each other, such being problematic.

With the method (2), since the carbon paper has a substantially flat surface, the thickness of the carbon paper is likely to be maintained constant, at the time of hot-pressing with the ion exchange membrane after formation of the catalyst layer, such being advantageous. However, if a carbon paper is used, no substantially high cell voltage is likely to be obtained, such being problematic. The carbon paper is obtained by sheeting carbon fibers, and accordingly no adequate electrical conductivity in a thickness direction can be maintained unless a pressure is supplied. On the other hand, the carbon paper has a high mechanical rigidity, but it has such drawbacks that it is relatively fragile and is poor in elasticity, and accordingly it easily fractures when a strong pressure is applied thereto, thus leading to decrease in electrical conductivity and gas permeability.

Further, when the carbon paper is incorporated in a fuel cell, it is pressed in a thickness direction and crashed, and accordingly from its structure, the gas permeability in a thickness direction is good, but the gas permeability in a plane direction tends to be poor. Accordingly, when the gas diffusion layer is supplied with gas from a separator having gas flow paths formed by ribs, it is adequately supplied with gas in a thickness direction at portions at which the gas diffusion layer is not in contact with the ribs (at portions at which the gas diffusion layer is in contact with the gas flow paths), but the gas is less likely to diffuse in a thickness direction at portions at which the gas diffusion layer is in contact with the ribs, and accordingly no adequate cell reaction tends to take place, thus leading to a decrease in cell output.

The carbon cloth in the method (3) is a woven fabric consisting of a thread obtained by twisting carbon short fibers. Accordingly, it is not mechanically fragile as the carbon paper and is flexible, and has elasticity in a thickness direction. Further, since a carbon layer is formed thereon, carbon fibers constituting the carbon cloth are fixed, and the shape is maintained. Accordingly, the strength and the electrical conductivity of the gas diffusion layer are secured, and damage of the catalyst layer due to fluffing of the fibers constituting the carbon cloth is prevented (hereinafter this function is referred to as protection of the catalyst layer).

However, when the catalyst layer is formed on the surface of the gas diffusion layer, a hydrophilic ion exchange resin component contained in a catalyst ink for formation of the catalyst layer infiltrates into the gas diffusion layer to some extent, whereby even a gas diffusion layer subjected to a water repellent treatment becomes hydrophilic in part, and water repellency significantly decreases. Accordingly, the gas diffusion layer is likely to get wet, a drainage function of e.g. water formed by the cell reaction decreases in a short period of time, thus leading to a decrease in cell properties.

### DISCLOSURE OF THE INVENTION

The present inventors have conducted extensive studies on the structure of a bonded product comprising a gas diffusion layer, a catalyst layer and a membrane bonded and integrated (hereinafter referred to as an electrode/membrane assembly) with respect to a technique to use a gas diffusion layer comprising a gas diffusion layer substrate and a carbon layer formed on the surface of the substrate in the above method (3), and as a result, they have found a method to prevent a decrease in water repellency of the gas diffusion layer which is a drawback in a conventional method, while securing the strength of the gas diffusion layer, the electrical conductivity and the function to protect the catalyst layer.

It is an object of the present invention to provide an electrode/membrane assembly for a polymer electrolyte fuel cell, with which water repellency of a gas diffusion layer is maintained and good gas diffusion properties can be held stably for a long period of time even when operated for a long period of time, and which has a high electrical conductivity.

The present invention provides an electrode/membrane assembly for a polymer electrolyte fuel cell comprising an anode, an ion exchange membrane and a cathode laminated in this order and bonded to one another, wherein the above anode and/or the above cathode is a gas diffusion electrode which comprises a gas diffusion layer comprising a porous carbon substrate and a carbon layer made of a fluororesin and carbon black formed on the substrate, and a catalyst layer disposed to be in contact with the above carbon layer, containing a catalyst and a fluorocarbon polymer having sulfonic acid groups, and which contains a solvent-soluble fluorine-containing polymer having substantially no ion exchange group, the above gas diffusion electrode is disposed so that the above catalyst layer is in contact with the above ion exchange membrane, and the above ion exchange membrane comprises a fluorocarbon polymer having sulfonic acid groups having a thickness of from 20 to 150 µm, and a process for its production.

The present invention further provides a process for producing an electrode/membrane assembly for a polymer electrolyte fuel cell, which comprises forming a carbon layer made of a fluororesin and carbon black on a porous carbon substrate so that components of said carbon layer infiltrate into at least part of pore portions of the above carbon substrate, coating said carbon layer with a liquid containing a catalyst and a fluorocarbon polymer having sulfonic acid groups to form a catalyst layer, followed by impregnation with a solution containing a solvent-soluble fluorine-containing polymer having substantially no ion exchange group and baking at from 100 to 200°C to prepare a gas diffusion electrode, disposing an anode and a cathode to face each other, by using the above gas diffusion electrode as the anode and/or the cathode so that the above catalyst layer faces inside, and interposing between the anode and the cathode an ion exchange membrane comprising a fluorocarbon polymer having sulfonic acid groups having a thickness of from 20 to 150 µm, followed by hot pressing, so that the anode and the cathode are bonded to each side of the ion exchange membrane.

### BRIEF DESCRIPTION OF THE DRAWINGS

FIG. 1: A cross-sectional view illustrating an electrode/membrane assembly prepared in Example 1.
FIG. 2: A diagram illustrating changes with time of a voltage between terminals of fuel cells of Examples 1, 2 and 3.

### BEST MODE FOR CARRYING OUT THE INVENTION

In the present invention, a porous carbon substrate is used for the gas diffusion layer. As the porous carbon substrate, a carbon paper or a carbon cloth may be employed. In a case of the carbon cloth, the space between carbon short fibers constituting the carbon cloth is effectively utilized, whereby gas diffusion properties in a plane direction tend to be excellent. Further, it is not mechanically fragile and is flexible, whereby handling tends to be easy. On the other hand, the carbon paper has poor gas diffusion properties as compared with the carbon cloth, however, it has a substantially flat surface, whereby its thickness is likely to be kept constant even in a case where hot-pressing is carried out when bonded to an ion exchange membrane after formation of the catalyst layer for example. Accordingly, the dispersion of thickness of the gas diffusion layer can be suppressed in mass production of electrode/membrane assembly.

The porous carbon substrate has a porosity of preferably from 50 to 90%, particularly preferably from 60 to 80%. If the porosity is less than 50%, the substrate may be too dense and the gas diffusion properties may be inadequate, and there is fear that water formed by a cell reaction is hardly discharged particularly at the cathode. On the other hand, if the porosity exceeds 90%, mechanical strength tends to be poor, whereby the shape is hardly maintained.

Further, the thickness of the porous carbon substrate is preferably from 100 to 700 µm. If it is less than 100 µm, particularly in a case where the substrate is disposed so that it is adjacent to a separator having a plurality of ribs and using grooves between adjacent two ribs as gas flow paths, diffusion of gas to an electrode site in a thickness direction at portions at which the porous carbon substrate is in contact with the ribs tends to be inadequate. Further, if the thickness exceeds 700 µm, it tends to take long for the fuel gas to diffuse into the catalyst layer, and there is fear that the fuel may run short. It is more preferably from 200 to 500 µm.

In the present invention, with respect to the carbon layer made of a fluororesin and carbon black, to be formed on the porous carbon substrate, its components preferably infiltrate into pore portions of the porous carbon substrate to some extent, whereby the carbon layer is fixed on the porous carbon substrate by an anchor effect, and nodes of fibers constituting the porous carbon substrate are fixed to some extent, and accordingly a shape maintenance effect of the porous carbon substrate can be obtained, and rigidity can be increased. In order to obtain such effects, the components of the carbon layer infiltrate preferably in a depth of at least 5 µm in a thickness direction of the porous carbon substrate.

On the other hand, if the components of the above carbon layer infiltrate in a depth exceeding 50 µm from the surface of the porous carbon substrate in a thickness direction, since the carbon layer has poor gas diffusion properties, there is fear that the gas diffusion properties of the porous carbon substrate in a plane direction may significantly decrease. In view of the gas diffusion properties, the depth of the infiltration portions of the components of the carbon layer is preferably shallow regardless of the thickness of the porous carbon substrate. Accordingly, in the present invention, the components of the carbon layer infiltrate in a depth of preferably from 5 to 50 µm, particularly preferably from 10 to 20 µm, from the surface at the pore portions of the porous carbon substrate.

The fluororesin contained in the carbon layer is not particularly limited so long as it has water repellency, and it may be dissolved or may not be dissolved in a solvent. Specifically, PTFE may, for example, be mentioned.

The carbon layer in the present invention has to have a function to supply a reaction gas by diffusion and remove it, a function to discharge humidifying water contained in the gas and water formed by the cell reaction, a function as an electrically conductive material, a function to maintain the shape of the porous carbon substrate, and a function to protect the ion exchange membrane. Accordingly, it is required to have a smooth surface to some extent and have porosity, water repellency and electrical conductivity. If the thickness of the carbon layer present on the surface of the porous carbon substrate is less than 10 µm, there is fear that the surface of the porous carbon substrate may not adequately be smoothened, and that the ion exchange membrane may not adequately be protected. Further, if the thickness of the carbon layer is thicker than 100 µm, the gas diffusion properties as the entire gas diffusion layer tend to decrease. Accordingly, in the present invention, the thickness of the carbon layer is preferably from 10 to 100 µm, particularly preferably from 20 to 70 µm.

In the present invention, with respect to the catalyst layer disposed to be in contact with the carbon layer, the thickness is preferably thick so as to increase the reaction sites. However, if it is too thick, it tends to be difficult to rapidly supply a reaction gas by diffusion and remove it, or to discharge humidifying water contained in the gas and water formed by the cell reaction. Accordingly, the thickness of the catalyst layer in the present invention is preferably from 3 to 25 µm, particularly preferably from 4 to 10 µm.

The gas diffusion electrode of the present invention comprises a gas diffusion layer comprising a porous carbon substrate and a carbon layer formed on the substrate, and a catalyst layer disposed to be in contact with said gas diffusion layer, and contains a solvent-soluble fluorine-containing polymer having substantially no ion exchange group, and thereby has water repellency. Here, in the present specification, the solvent-soluble fluorine-containing polymer is such a fluorine-containing polymer that a solvent in which said polymer can be dissolved is present.

As a method of making the gas diffusion electrode contain the solvent-soluble fluorine-containing polymer, a method may, for example, be mentioned, wherein a solution of the fluorine-containing polymer having a solution concentration at a level of from 0.05 to 2 mass% is mixed with a liquid containing materials constituting the catalyst layer (hereinafter referred to as catalyst ink), and the carbon layer is coated with the obtained mixed liquid to form a catalyst layer, followed by baking. Further, a method is also preferred wherein the gas diffusion electrode comprising a gas diffusion layer and a catalyst layer, the catalyst layer formed on a carbon layer by means of the above catalyst ink, is impregnated with a solution of the above fluorine-containing polymer, followed by baking. With this method, the gas diffusion layer and the catalyst layer may be subjected to a water repellent treatment simultaneously. In either method, the baking temperature is preferably from 100 to 200°C, particularly preferably at a level of from 120 to 180°C, and the baking atmosphere is preferably in an inert gas such as nitrogen or argon or in vacuum.

If the solution concentration is less than 0.05 mass%, the amount of the fluorine-containing polymer attached in one impregnation step tends to be small, whereby the impregnation step has to be carried out repeatedly, and the production efficiency tends to be poor. Further, if it exceeds 2 mass%, the viscosity of the solution tends to be high, whereby the solution is less likely to infiltrate into pores of the electrode, the distribution of the solvent-soluble fluorine-containing polymer as a water repellency agent tends to be non-uniform, and further, the pores of the gas diffusion electrode are likely to be occluded, whereby the gas diffusion properties tend to decrease.

Further, if the above baking at from 100 to 200°C is not carried out, a coating of the solvent-soluble fluorine-containing polymer may not adequately be attached to the electrode, and there is fear that the coating may easily peel off during operation of the fuel cell, whereby water repellency may not be maintained. Accordingly, it is preferred to conduct heating at the above temperature range in which a fluorocarbon polymer having sulfonic acid groups (hereinafter referred to as sulfonic acid type fluorocarbon polymer) contained in the catalyst layer is not deteriorated.

In a conventional method of incorporating PTFE particles as a water repellency agent into the gas diffusion electrode, since the PTFE particles do not dissolve in a solvent and do not disperse in a solvent unless a dispersing agent is added thereto, and accordingly a dispersion of PTFE is incorporated into the electrode. In such a case, it is required to remove the dispersing agent in view of an impact on the cell reaction, and accordingly heating at a temperature of at least 300°C is required. This temperature is much higher than the heat resistant temperature of the sulfonic acid type fluorocarbon polymer. Accordingly, it is difficult to impart water repellency to the catalyst layer containing the sulfonic acid type fluorocarbon polymer.

On the other hand, in a case where the solvent-soluble fluorine-containing polymer is used as a water repellency agent as in the present invention, the solvent-soluble fluorine-containing polymer may be mixed when the catalyst containing the sulfonic acid type fluorocarbon polymer is formed, or a solution of the solvent-soluble fluorine-containing polymer may be impregnated after formation of the catalyst layer, and accordingly, the degree of freedom in designing the gas diffusion electrode is high. Further, not a dispersion of particles but a solution can be used, whereby the solvent-soluble fluorine-containing polymer as a water repellency agent infiltrates into minute portions of the gas diffusion electrode. Further, the above solution has membrane-forming properties, whereby water repellency can be imparted to the electrode efficiently with a small amount of the solvent-soluble fluorine-containing polymer, and the retention of water repellency tends to be excellent.

In the present invention, the above gas diffusion electrode is used for at least one of an anode and a cathode, but it is preferably used for a cathode wherein water is produced by the reaction of the fuel cell, and in this case, the anode may be the above gas diffusion electrode or another gas diffusion electrode having a catalyst layer. The anode and cathode are disposed to face each other so that the catalyst layers face inside, and bonded and integrated with an ion exchange membrane interposed therebetween. Bonding may be carried out, for example, by means of hot-pressing.

The ion exchange membrane of the present invention has a thickness of from 20 to 150 µm, preferably from 20 to 50 µm. If it is too thin, mechanical strength tends to be poor, and the amount of cross leak of hydrogen (such a phenomenon that hydrogen passes through the membrane and leaks from the anode to cathode) tends to increase, whereby the electricity generation efficiency tends to decrease. On the other hand, if it is too thick, the membrane resistance tends to increase, the back-diffused water which moves from the cathode to the anode due to concentration gradient of water content tends to decrease, and gas diffusion properties at the cathode tend to decrease.

Further, the ion exchange membrane comprises a sulfonic acid type fluorocarbon polymer, and said polymer may be the same as or different from the sulfonic acid type fluorocarbon polymer contained in the gas diffusion electrode. Here, in the present specification, the sulfonic acid type fluorocarbon polymer is a hydrocarbon type polymer having sulfonic acid groups and at least part of hydrogen atoms replaced with fluorine atoms, and said hydrocarbon type polymer includes one containing ether linkage type oxygen atoms. Further, each of the resin constituting the ion exchange membrane and the resin contained in the gas diffusion electrode is preferably a sulfonic acid type perfluorocarbon polymer in view of durability of the fuel cell.

The solvent-soluble fluorine-containing polymer of the present invention is preferably insoluble in a solvent such as an alcohol or water which concerns or is produced by the cell reaction, and is soluble only in a particular solvent, and it is preferably a solid within a range of from room temperature to 150°C which is a temperature at which the polymer electrolyte fuel cell is used. Further, the solvent-soluble fluorine-containing polymer having substantially no ion exchange group may be one having hydrogen atoms partially fluorinated or one having the entire hydrogen atoms fluorinated.

As the entirely fluorinated solvent-soluble fluorine-containing polymer, a polymer comprising polymer units represented by any one of the formulae 1 to 3 may, for example, be preferably used. Since such a polymer has an alicyclic structure in its molecule, it is less likely to crystallize due to twist of the molecule, and is soluble in a particular fluorine type solvent. Here, in the formulae 1 to 3, each of n, m, x and y is an integer of at least 1.

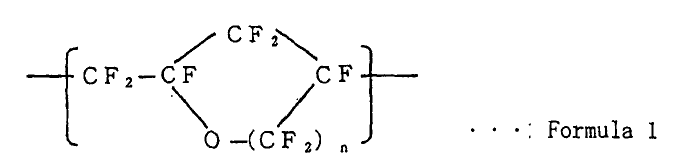

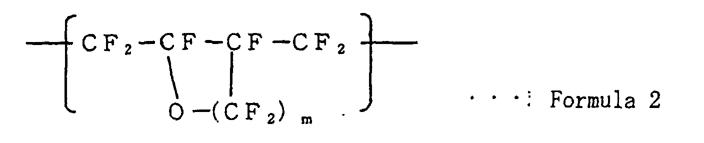

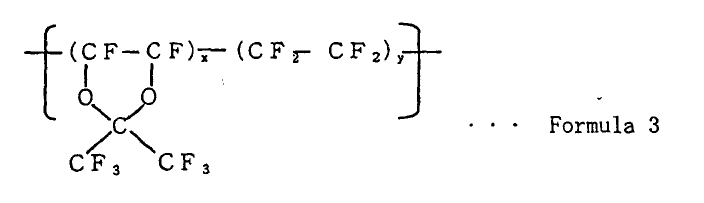

The solvent in which the above soluble fluorine-containing polymer is dissolved, at least one member selected from the group consisting of fluoroalkanes, fluorotrialkylamines and fluoroalkyltetrahydrofurans may be used. Specifically, perfluoro(3-butyltetrahydrofuran), perfluoro(tributylamine), perfluoro(n-heptane) and perfluoro(n-nonane) may, for example, be mentioned.

As a measure to compare the power of water repellency of the water repellency agent, surface tension may be mentioned, and comparison of the critical surface tension by a functional group is as follows. The numerical value in brackets represents the critical surface tension (dyn/cm).

-CF₃(6)<-CF₂H(15)<-CF₂-(18.5)<-CH₃(24)<-CH₂-(31)

Accordingly, a fluorine-containing polymer having the entire hydrogen atoms replaced with fluorine has a higher water repellency than a fluorine-containing polymer having hydrogen atoms partially replaced with fluorine, and accordingly the solvent-soluble fluorine-containing polymer comprising polymer units represented by any one of the formulae 1 to 3 is preferred in view of water repellency also.

Further, the solvent-soluble fluorine-containing polymer comprising polymer units represented by any one of the formulae 1 to 3 hardly decomposes into monomers and thereby hardly undergo radical transmission, and is excellent in acid resistance and alkali resistance. The molecular weight of the solvent-soluble fluorine-containing polymer is at a level of from several thousands to 200,000, and the higher the molecular weight, the higher the viscosity at the same concentration, but in the present invention, preferred is one having a molecular weight of from 5,000 to 130,000, whereby the solution permeability into the electrode can be secured, the adhesive power of the above fluorine-containing polymer to the surface of pores of the electrode tends to be adequate, and water repellency of the electrode can be maintained.

In the present invention, a water repellency treatment of the gas diffusion electrode can be carried out by using a liquid solvent-soluble fluorine-containing polymer solution, and accordingly the surface of pores of the electrode containing the gas diffusion layer can be coated with the fluorine-containing- polymer uniformly as compared with the water repellency treatment by using a solvent-insoluble fluorine-containing polymer such as PTFE, and water repellency can be imparted to the gas diffusion electrode efficiently with a small amount. Further, the solvent-soluble fluorine-containing polymer solution has membrane-forming properties, and accordingly the water repellent resin coating obtained by baking is likely to have a secured durability.

The content of the solvent-soluble fluorine-containing polymer in the gas diffusion electrode is preferably at least 0.01 mass%, since if it is too low, it tends to be difficult to obtain water repellency with an adequate durability. On the contrary, if the content is too high, there is fear that a water repellent resin coating tends to be too thick, whereby the resistance of the electrode may increase or the electrode pores may be occluded, and accordingly it is preferably at most 30 mass%.

Now, the present invention will be explained in detail with reference to Examples (Examples 1 and 2) and Comparative Example (Example 3), but the present invention is by no means restricted thereto.

### EXAMPLE 1

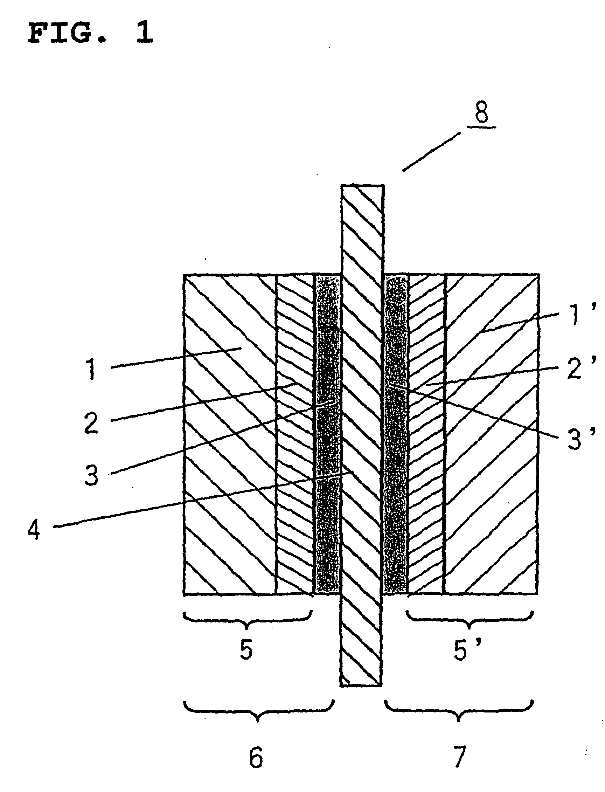

An electrode/membrane assembly 8 was prepared as follows. FIG. 1 is a cross-sectional view illustrating the electrode/membrane assembly 8 prepared in Example 1.

As gas diffusion layers 5, 5', a commercially available product (trade name: CARBEL-CL, manufactured by Japan Gore-Tex Inc.) was used. The gas diffusion layers 5, 5' comprise carbon cloths 1, 1' subjected to a surface treatment by PTFE, and carbon layers 2, 2' made of carbon black and PTFE formed on the surface of the carbon cloths. Here, the thickness of the carbon cloths 1, 1' is 400 µm, the thickness of the carbon layers 2, 2' is 60 µm, and components constituting the carbon layers 2, 2' infiltrate into pore portions of the carbon cloths 1, 1' in a depth of from 5 to 30 µm although there is partial dispersion.

A liquid containing a sulfonic acid type perfluorocarbon polymer having an ion exchange capacity of 1.1 meq./g dry resin (copolymer comprising polymer units based on tetrafluoroethylene and polymer units based on CF₂=CFOCF(CF₃)O(CF₂)₂SO₃H) and carbon having platinum supported thereon (Pt: C=40:60 (mass ratio)) in a mass ratio of 25:75 and containing a mixed solvent of ethanol and water as a medium was prepared and used as an ink for formation of a catalyst layer on the anode side. This ink was coated on the carbon layer 2 so that the amount of Pt attached would be 0.5 mg/cm², followed by drying to form a catalyst layer 3 having a thickness of about 15 µm.

Then, this was impregnated with a solution having a polymer having a molecular weight of about 50,000 and comprising polymer units based on CF₂=CFO(CF₂)₂CF=CF₂ dissolved in a mixed solvent of perfluoro(2-butyltetrahydrofuran) and perfluoro(tributylamine) in a mass ratio of 1:1 at a concentration of 0.5 mass%. Then, baking was carried out under vacuum at 170°C to prepare a gas diffusion electrode (anode 6) having the polymer comprising polymer units based on CF₂=CFO(CF₂)₂CF=CF₂ as a water repellency agent attached thereto in an amount of 0.4 mg/cm².

Further, as a catalyst ink for cathode, a liquid containing a sulfonic acid type perfluorocarbon polymer having an ion exchange capacity of 0.91 meq./g dry resin (trade name: Nafion, manufactured by Du Pont) and carbon having platinum supported thereon (Pt:C=40:60 (mass ratio)) in a mass ratio of 25:75 and containing a mixed solvent of ethanol, methanol and water as a medium, was prepared. This ink was coated on the carbon layer 2' so that the amount of Pt attached would be 0.5 mg/cm² in the same manner as the anode 6, followed by drying to form a catalyst layer 3' having a thickness of about 15 µm. Then, a treatment was carried out in the same manner as the gas diffusion electrode on the anode side so that the polymer comprising polymer units based on CF₂=CFO(CF₂)₂CF=CF₂ was attached in an amount of 0.4 mg/cm² to prepare a cathode 7.

Each of the anode 6 and the cathode 7 was cut into a 5.3 cm square. An ion exchange membrane 4 comprising a sulfonic acid type perfluorocarbon polymer having a membrane thickness of 80 µm as dried and an ion exchange capacity of 1.0 meq./g dry resin (trade name: FLEMION S, manufactured by Asahi Glass Company, Limited) was sandwiched between the above anode 6 and cathode 7 which were disposed to face each other so that the catalyst layers 3, 3' faced inside, followed by hot-pressing for bonding to prepare an electrode/membrane assembly 8.

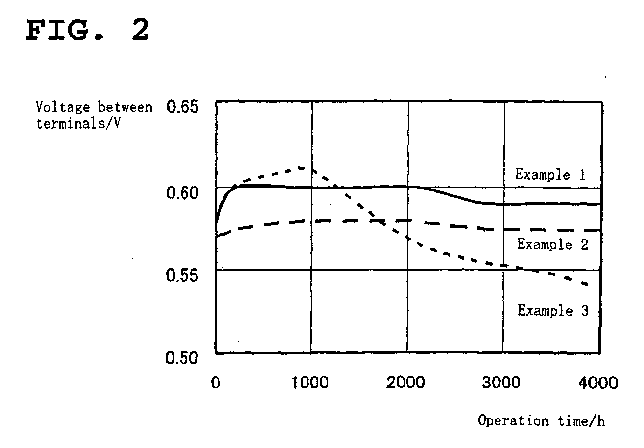

The above electrode/membrane assembly was incorporated into a fuel cell, and hydrogen with a utilization ratio of 70% and the air with a utilization ratio of 40% as fuel gasses were supplied to the anode 6 and the cathode 7, respectively, under normal pressure at a cell temperature of 80°C, and a continuous electricity generation was carried out at a constant current operation of 0.5 A/cm², and the change with time of a voltage between terminals was measured. The results are shown in FIG. 2. FIG. 2 is a diagram illustrating the change with time of a voltage between terminals of the fuel cells of Examples 1, 2 and 3.

### EXAMPLE 2

For both anode and cathode, as a gas diffusion layer, one comprising a carbon paper subjected to a water repellency treatment by means of PTFE (trade name: TGP-H-060M, manufactured by Toray Industries, Inc.) and a carbon layer made of carbon black and PTFE formed on the surface of the carbon paper, was used. Here, the thickness of the carbon paper was 200 µm, the thickness of the carbon layer was 50 µm, and components constituting the carbon layer infiltrated into pore portions of the carbon paper in a depth of from 5 to 20 µm although there was partial dispersion.

An electrode/membrane assembly was prepared in the same manner as in Example 1 except that the above gas diffusion layer was used. This was incorporated into a fuel cell in the same manner as in Example 1, a continuous electricity generation was carried out in the same manner as in Example 1, and evaluation was carried out in the same manner as in Example 1. The results are shown in FIG. 2.

### EXAMPLE 3 (COMPARATIVE EXAMPLE)

An electrode/membrane assembly was obtained in the same manner as in Example 1 except that neither cathode nor anode was impregnated with the solution of the polymer comprising polymer units based on CF₂=CFO(CF₂)₂CF=CF₂ after formation of the catalyst layer. This was incorporated in a fuel cell, a continuous electricity generation was carried out in the same manner as in Example 1, and evaluation was carried out in the same manner as in Example 1. The results are shown in FIG. 2.

In Example 3, the cell voltage started to decrease after 1200 hours had passed, and it decreased from 0.61V to 0.54V after 4000 hours. On the other hand, in Examples 1 and 2, continuous operation properties were extremely stable, and even after 4000 hours, the cell voltage only decreased to 0.59V relative to the initial value of 0.60V in Example 1, and in Example 2, it was substantially the same as the initial value.

### INDUSTRIAL APPLICABILITY

According to the present invention, a coating of a water repellency agent comprising a solvent-soluble fluorine-containing polymer can efficiently be formed on a catalyst layer and minute portions of a gas diffusion layer, whereby water repellency which lasts for a long period of time can be imparted to the entire gas diffusion electrode even if the amount of the water repellency agent is small, and accordingly an electrode/membrane assembly for a polymer electrolyte fuel cell excellent in durability can be provided. Further, the solvent-soluble fluorine-containing polymer can be handled as a liquid by dissolving it in a solvent, whereby the degree of freedom in designing the electrode is high.

## Claims

1. An electrode/membrane assembly for a polymer electrolyte fuel cell comprising an anode, an ion exchange membrane and a cathode laminated in this order and bonded to one another, wherein the above anode and/or the above cathode is a gas diffusion electrode which comprises a gas diffusion layer comprising a porous carbon substrate and a carbon layer made of a fluororesin and carbon black formed on the substrate, and a catalyst layer disposed to be in contact with the above carbon layer, containing a catalyst and a fluorocarbon polymer having sulfonic acid groups, and which contains a solvent-soluble fluorine-containing polymer having substantially no ion exchange group, the above gas diffusion electrode is disposed so that the above catalyst layer is in contact with the above ion exchange membrane, and the above ion exchange membrane comprises a fluorocarbon polymer having sulfonic acid groups having a thickness of from 20 to 150 µm.

2. The electrode/membrane assembly for a polymer electrolyte fuel cell according to Claim 1, wherein the above carbon substrate has a thickness of from 100 to 700 µm, the above carbon layer has a thickness of from 10 to 100 µm, and components of the above carbon layer infiltrate into pore portions of the above carbon substrate in a depth of from 5 to 50 µm from the surface.

3. The electrode/membrane assembly for a polymer electrolyte fuel cell according to Claim 1 or 2, wherein the above carbon substrate is a carbon cloth and/or a carbon paper.

4. The electrode/membrane assembly for a polymer electrolyte fuel cell according to any one of Claims 1 to 3, wherein the above solvent-soluble fluorine-containing polymer is represented by any one of the following formulae 1 to 3: 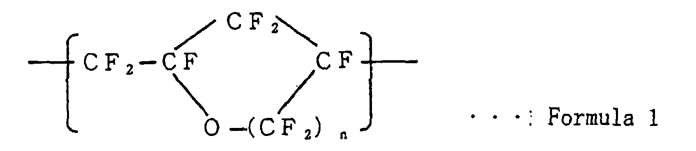 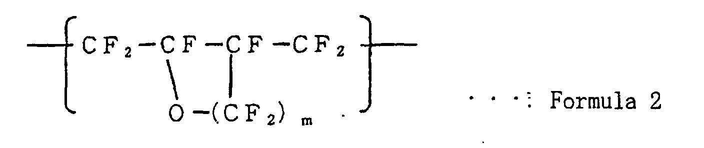 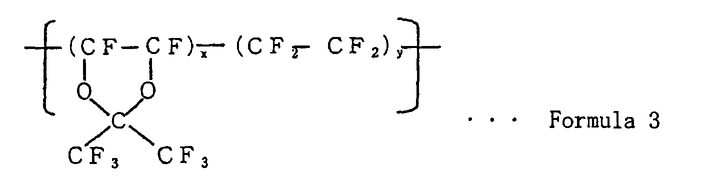 wherein each of n, m, x and y is an integer of at least 1.

5. A process for producing an electrode/membrane assembly for a polymer electrolyte fuel cell, which comprises:
forming a carbon layer made of a fluororesin and carbon black on a porous carbon substrate so that components of said carbon layer infiltrate into at least part of pore portions of the above carbon substrate,
coating said carbon layer with a liquid containing a catalyst and a fluorocarbon polymer having sulfonic acid groups to form a catalyst layer,
followed by impregnation with a solution containing a solvent-soluble fluorine-containing polymer having substantially no ion exchange group and baking at from 100 to 200°C to prepare a gas diffusion electrode,
disposing an anode and a cathode to face each other, by using the above gas diffusion electrode as the anode and/or the cathode so that the above catalyst layer faces inside, and
interposing between the anode and the cathode an ion exchange membrane comprising a fluorocarbon polymer having sulfonic acid groups having a thickness of from 20 to 150 µm, followed by hot pressing, so that the anode and the cathode are bonded to each side of the ion exchange membrane.

6. The process for producing an electrode/membrane assembly for a polymer electrolyte fuel cell according to Claim 5, wherein the above solvent-soluble fluorine-containing polymer is represented by any one of the following formulae 1 to 3: 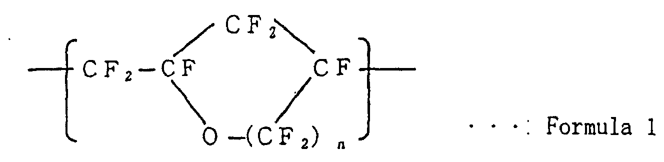 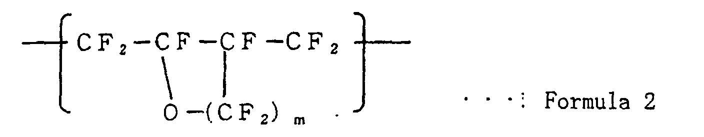 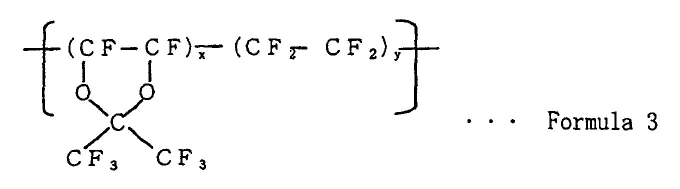 wherein each of n, m, x and y is an integer of at least 1.

7. The process for producing a polymer electrolyte fuel cell according to Claim 6,.wherein the solution containing a solvent-soluble fluorine-containing polymer has a concentration of from 0.01 to 30 mass%.

8. The process for producing a polymer electrolyte fuel cell according to Claim 6 or 7, wherein the solvent of the solution containing a solvent-soluble fluorine-containing polymer is at least one member selected from the group consisting of fluoroalkanes, fluorotrialkylamines and fluoroalkyltetrahydrofurans.
